# NEUE EUROPÄISCHE PATENTSCHRIFT

(11) **EP 3 040 219 B2**
(45) Veröffentlichungstag und Bekanntmachung des Hinweises auf die Entscheidung über den Einspruch: **10.01.2024**
(45) Hinweis auf die Patenterteilung: 20.01.2021
(21) Anmeldenummer: 15002648.2
(22) Anmeldetag: 10.09.2015
(51) Int. Cl.: B60G 17/033, B60G 99/00, B62D 63/02, B66F 9/06

(54) **MODULARES NIEDERFLURTRANSPORTSYSTEM**
MODULAR LOW FLOOR TRANSPORT SYSTEM
SYSTEME DE TRANSPORT SURBAISSE MODULAIRE

(30) Priorität: 27.11.2014 DE 102014017532
(43) Veröffentlichungstag der Anmeldung: 06.07.2016
(73) Patentinhaber: KUKA Deutschland GmbH, 86165 Augsburg (DE)
(72) Erfinder: Riedel, Martin, 86165 Augsburg (DE); Scheuvens, Christoph, 53937 Schleiden (DE)
(74) Vertreter: Schlotter, Alexander Carolus Paul

(56) Entgegenhaltungen:
- EP-B1- 1 957 348
- WO-A2-2013/182448
- DE-A1-102012 023 999
- DE-A1-102012 102 648
- DE-A1-102013 002 860
- FR-A1- 2 449 578
- JP-A- 2009 208 527

## Beschreibung

Die vorliegende Erfindung betrifft ein modulares Niederflurtransportsystem mit wenigstens einem Antriebs- und wenigstens einem Tragmodul, ein entsprechendes Antriebs- bzw. Tragmodul sowie ein Verfahren zur Montage eines solchen Niederflurtransportsystems.

Aus der EP 1 957 348 B1 ist ein Fahrzeugverbund aus einer Vielzahl von Einzelfahrzeugen bekannt, die mit vertikalem Spiel miteinander gekoppelt sind, wobei Antriebs-Einzelfahrzeuge angetriebene Mecanum-Räder aufweisen, während Trag-Einzelfahrzeuge antriebslose Räder aufweisen. Hierdurch soll eine Nutzlast gleichmäßig auf die Einzelfahrzeuge verteilt werden.

Eine solche gleichmäßige Lastverteilung auf die Einzelfahrzeuge kann nachteilig zu einer übermäßigen Belastung der Antriebs-Einzelfahrzeuge führen, die aufgrund der Antriebe der Mecanum-Räder regelmäßig geringere Maximallasten ertragen als antriebslose Trag-Einzelfahrzeuge.

Aufgabe der vorliegenden Erfindung ist es, ein verbessertes modulares Niederflurtransportsystem zur Verfügung zu stellen.

Diese Aufgabe wird durch ein modulares Niederflurtransportsystem mit den Merkmalen des Anspruchs 1 gelöst. Ansprüche 14, 15 stellen ein Antriebs modul eines hier beschriebenen Niederflurtransportsystems sowie ein Verfahren zu dessen Montage unter Schutz. Die Unteransprüche betreffen vorteilhafte Weiterbildungen.

Nach einem Aspekt der vorliegenden Erfindung weist ein modulares Niederflurtransportsystem ein oder mehrere hier beschriebene, insbesondere wenigstens im Wesentlichen baugleiche, Antriebsmodule auf, die jeweils eine Antriebs-Basis und ein damit verbundenes Antriebs-Fahrwerk mit jeweils einem oder mehreren, insbesondere wenigstens drei, vorzugsweise wenigstens vier oder mehr, Antriebsrädern aufweisen, die jeweils mit einem Antrieb gekoppelt sind.

In einer Ausführung weisen ein oder mehrere, insbesondere alle Antriebsräder jeweils einen eigenen, separat ansteuerbaren Antrieb auf. Zusätzlich oder alternativ weisen in einer Ausführung zwei oder mehrere Antriebsräder jeweils einen gemeinsamen Antrieb auf, mit dem sie insbesondere über ein oder mehrere Differentiale gekoppelt sein können. Ein Antrieb kann insbesondere einen oder mehrere Elektromotoren und/oder ein Getriebe aufweisen. In einer Ausführung sind ein oder mehrere der Antriebsmodule selbstfahrend, wobei ihre Antriebe insbesondere zentral oder dezentral gesteuert werden können, insbesondere können die Steuerung eines Antriebsmoduls einen Master und die Steuerungen der anderen Antriebsmodule Slaves einer Master-Slave-Konfiguration bilden oder eine zentrale Steuerung die Steuerungen der einzelnen Antriebsmodule ansteuern.

Das modulare Niederflurtransportsystem weist in einer Ausführung ein oder mehrere hier beschriebene, insbesondere wenigstens im Wesentlichen baugleiche, Tragmodule auf, die jeweils eine Trag-Basis und ein damit verbundenes Trag-Fahrwerk mit genau einem oder mehreren, insbesondere wenigstens oder genau zwei oder drei antriebslosen Tragrädern aufweisen. In einer Ausführung sind ein oder mehrere der Tragmodule passiv ausgelegt bzw. weisen keine Antriebe auf, in einer anderen Ausführung sind antriebslose Tragräder von Antrieben, insbesondere mechanisch, entkoppelt und/oder die an sich vorhandenen Antriebe von einer Energieversorgung trennbar, insbesondere getrennt.

Eine oder mehrere der Antriebs-Basen sind in einer Ausführung mit einer oder mehreren anderen der Antriebs-Basen und/oder einer oder mehreren der Trag-Basen bezüglich bzw. in der nachfolgend erläuterten Hubrichtung und/oder einer oder zwei zueinander senkrechten Querrichtungen, die senkrecht zu der Hubrichtung sind, axial- und/oder drehfest, insbesondere, wenigstens im Wesentlichen, spielfrei, insbesondere starr, verbindbar, insbesondere sind bzw. werden diese Basen derart miteinander verbunden. Zusätzlich oder alternativ sind in einer Ausführung eine oder mehrere der Trag-Basen mit einer oder mehreren anderen der Trag-Basen und/oder einer oder mehreren der Antriebs-Basen bezüglich bzw. in der Hubrichtung und/oder der bzw. den Querrichtungen axial- und/oder drehfest, insbesondere, wenigstens im Wesentlichen, spielfrei, insbesondere starr, verbindbar, insbesondere sind bzw. werden diese Basen derart miteinander verbunden. Insbesondere sind bzw. werden wenigstens eine Antriebs-Basis und wenigstens eine Trag-Basis derart miteinander verbindbar, insbesondere verbunden. Anspruchsgemäß sind wenigstens eine Antriebs-Basis und wenigstens eine Trag-Basis bezüglich der Hubrichtunq fest miteinander verbunden.

Unter einer in bzw. bezüglich einer Richtung, insbesondere der Hub- oder einer Querrichtung, axialfesten Verbindung zweier Körper, insbesondere Basen, miteinander wird insbesondere verstanden, dass die Körper (wenigstens) in dieser Richtung relativ zueinander, wenigstens im Wesentlichen, axialspielfrei, insbesondere axial unbeweglich bzw. nicht verschiebbar sind. Unter einer in bzw. bezüglich einer Richtung, insbesondere der Hub- oder einer Querrichtung, drehfesten Verbindung zweier Körper, insbesondere Basen, miteinander wird insbesondere verstanden, dass die Körper (wenigstens) um eine Drehachse parallel zu dieser Richtung relativ zueinander, wenigstens im Wesentlichen, drehspielfrei, insbesondere unbeweglich bzw. nicht verdrehbar sind. Zwei in bzw. bezüglich der Hubrichtung fest miteinander verbindbare, insbesondere verbundene, Körper, insbesondere Basen, können in einer Ausführung in der Hubrichtung gesehen, wenigstens im Wesentlichen, auf gleicher Höhe bzw. (in Querrichtung) nebeneinander bzw. in einer gemeinsamen Ebene angeordnet sein. Gleichermaßen können zwei in bzw. bezüglich der Hubrichtung fest miteinander verbindbare, insbesondere verbundene, Körper, insbesondere Basen, in der Hubrichtung gesehen um einen, wenigstens im Wesentlichen, festen Abstand versetzt angeordnet sein. Entsprechend bezieht sich eine bezüglich bzw. in einer Richtung feste Verbindung insbesondere auf eine ausgeschlossene Relativbewegung bzw. einen gesperrten Freiheitsgrad in dieser Richtung und nicht auf einen relativ zueinander in dieser Richtung versetzte Anordnung, etwa eine Anordnung in Hubrichtung übereinander.

In einer Ausführung werden bzw. sind wenigstens zwei der Basen lösbar miteinander verbunden und weisen hierzu eine entsprechende Kupplung auf. In einer Ausführung ist die Kupplung dazu eingerichtet, die Basen, insbesondere in bzw. bezüglich der Hubrichtung und/oder der bzw. den Querrichtungen axial- und/oder drehfest, miteinander zu verbinden, insbesondere form- und/oder reibschlüssig. In einer besonders einfachen Ausführung können zwei durch eine Kupplung lösbar miteinander gekoppelte Basen mit einer Verbindungsstruktur oder, insbesondere ihre einander gegenüberliegenden Stirnseiten, miteinander mit einer oder mehreren Schrauben verschraubt und/oder einander hintergreifenden Hinterschneidungen fixiert sein bzw. werden. Zusätzlich oder alternativ werden bzw. sind in einer Ausführung wenigstens zwei der Basen unlösbar bzw. dauerhaft miteinander verbunden, insbesondere stoffschlüssig miteinander verbunden oder integral ausgebildet.

Nach einem Aspekt der vorliegenden Erfindung ist bei einem oder mehreren Antriebsmodulen das Antriebs-Fahrwerk an der Antriebs-Basis in der vorstehend genannten Hubrichtung, insbesondere zwischen einer ein- und einer ausgefahrenen Stellung und/oder translatorisch, beweglich gelagert bzw. weist einen translatorischen Freiheitsgrad in der Hubrichtung auf.

In einer Weiterbildung ist bei einem oder mehreren dieser Antriebsmodule das Antriebs-Fahrwerk, insbesondere an der Antriebs-Basis, in der Hubrichtung durch ein Antriebs-Kraftelement nachgiebig abgestützt.

Die Hubrichtung schließt in einer Ausführung mit einer Tragebene der miteinander verbundenen Basen zur Aufnahme von Nutzlasten einen Winkel zwischen 75° und 115°, insbesondere von, wenigstens im Wesentlichen, 90° ein. In einer Ausführung ist die basenfeste Hubrichtung, wenigstens im Wesentlichen, vertikal bzw. schließt mit der Schwerkraftrichtung einen Winkel zwischen -15° und +15°, insbesondere von, wenigstens im Wesentlichen, 0°, ein, wenn das nutzlastfreie Niederflurtransportsystem bzw. Antriebsmodul auf einer ebenen horizontalen Aufstandsfläche steht.

Hierdurch können das bzw. die Antriebs-Fahrwerke bei einer Belastung der miteinander verbundenen Basen, in der Weiterbildung gegen eine Reaktionskraft des bzw. der Antriebs-Kraftelemente, in Hubrichtung ausweichen. Auf diese Weise kann in einer Ausführung die Gefahr einer übermäßigen Belastung der Antriebs-Fahrwerke reduziert, insbesondere vermieden werden. In der Weiterbildung kann zusätzlich die Gefahr einer zu geringen Aufstandskraft der Antriebsräder vorteilhaft reduziert, insbesondere vermieden werden.

In einer Ausführung sind das Antriebs-Kraftelement eines oder mehrerer Antriebsmodule und/oder ein oder mehrere damit verbundene(s) Tragmodul(e), insbesondere jeweils eine Verbindung von dessen Trag-Fahrwerk mit dessen Trag-Basis, derart ausgebildet, dass für wenigstens einen Bereich eines Einfederweges des bzw. der Antriebs-Fahrwerke gegen die jeweilige Antriebs-Basis in Hubrichtung eine Aufstandskraft dieses Antriebs-Fahrwerks auf eine gemeinsame ebene Aufstandsfläche senkrecht zu der Hubrichtung kleiner als eine Aufstandskraft des jeweiligen Trag-Fahrwerks ist.

Eine Nutzlast des Niederflurtransportsystems verteilt sich auf die miteinander verbundenen Basen und wird von diesen über die Verbindung mit dem jeweiligen Fahrwerk auf dieses übertragen und von dort als Aufstandskraft auf eine gemeinsame Aufstandsfläche aufgeprägt. Dabei senken sich die miteinander verbundenen Basen in Hubrichtung zur Aufstandsfläche hin, was vorliegend ohne Beschränkung der Allgemeinheit als Einfedern bezeichnet wird. Entsprechend bezeichnet ein Einfederweg im Sinne der vorliegenden Erfindung eine Reduzierung eines Abstandes der miteinander verbundenen Basen zu einer gemeinsamen Aufstandsfläche in Hubrichtung.

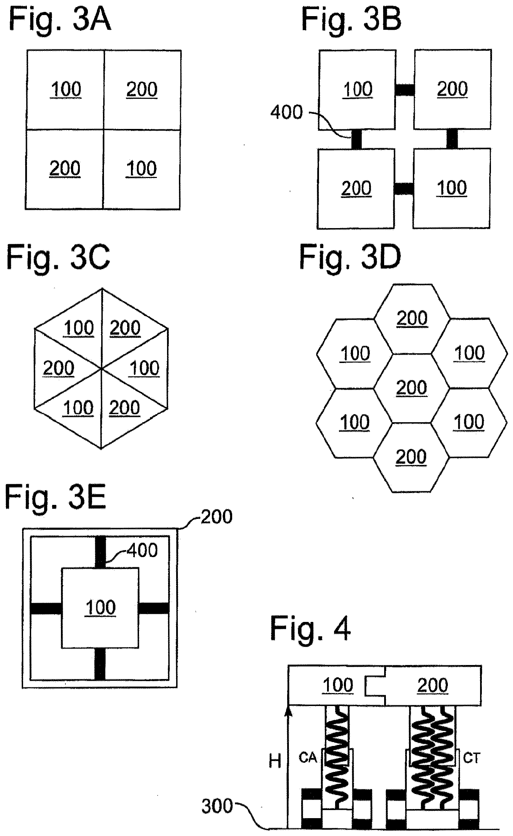

Besteht zum Beispiel, wie in Fig. 4 skizziert, das Niederflurtransportsystem aus einem Antriebsmodul, dessen Antriebs-Fahrwerk in einem Schubgelenk beweglich an der Antriebs-Basis 100 gelagert und mit einem Antriebs-Kraftelement in Form einer ersten Feder mit der Steifigkeit c_{A} dagegen abgestützt ist, und einem damit verbundenen Tragmodul, dessen Trag-Fahrwerk in einem parallelen Schubgelenk beweglich an der Trag-Basis 200 gelagert und mit einem Trag-Kraftelement in Form einer zweiten Feder mit der Steifigkeit c_{T} dagegen abgestützt ist, so definiert die Achse der Schubgelenke die Hubrichtung H. Fluchten die Aufstandsebenen durch die Aufstandspunkte der Antriebs- und Tragräder bei vom Boden abgehobenem Niederflurtransportsystem senkrecht zu der Hubrichtung miteinander, und ist die Steifigkeit c_{A} der ersten Feder kleiner als die Steifigkeit c_{T} der zweiten Feder, so federn beide Federn bei einem Aufsetzen der Fahrwerke auf eine gemeinsame ebene Aufstandsfläche um denselben Federweg ein. Aufgrund der größeren Steifigkeit c_{T} der zweiten Feder ist die Aufstandskraft des Trag-Fahrwerks dann für einen Bereich des Einfederweges bis zu einem eventuellen Aufsetzen der ersten Feder bzw. Anschlag des Schubgelenks des Antriebsmoduls größer als die Aufstandskraft des Antriebs-Fahrwerks, das somit durch das Trag-Fahrwerk vorteilhaft entlastet wird.

Zugleich bewirkt die erste Feder eine Aufstandskraft des Antriebs-Fahrwerks und erhöht so dessen zur Fortbewegung notwendige Reibung. Man erkennt am Beispiel der Fig. 4, dass das Antriebs-Kraftelement somit vorteilhaft die Gefahr einer zu geringen Aufstandskraft der Antriebsräder reduzieren kann. Man erkennt auch, dass das Antriebs-Kraftelement entfallen kann. In diesem Falle würde im Beispiel der Fig. 4 die Nutzlast bei Vernachlässigung von Reibung im Schubgelenk über die zweite Feder bzw. das Tragmodul alleine abgestützt, die Aufstandskraft der Antriebsräder rein aus Gewichtskräften resultieren.

In einer Ausführung sind eine Steifigkeit des Antriebs-Kraftelements wenigstens eines Antriebsmoduls, insbesondere die (Einzel)Steifigkeiten aller Antriebsmodule, jeweils für wenigstens einen Bereich des Einfederweges kleiner als die jeweiligen Einzelsteifigkeiten des bzw. der damit verbundenen Tragmodule, insbesondere deren Verbindungen ihres jeweiligen Trag-Fahrwerks mit ihrer Trag-Basis in Hubrichtung. In einer Ausführung beträgt eine Einzelsteifigkeit wenigstens eines Antriebs-Kraftelements in diesem Bereich des Einfederweges höchstens 75%, insbesondere höchstens 50%, insbesondere höchstens 25% der Einzelsteifigkeit wenigstens eines damit verbundenen Tragmoduls, insbesondere dessen Verbindung zwischen Basis und Fahrwerk.

Unter einer Steifigkeit c in Hubrichtung wird vorliegend insbesondere in fachüblicher Weise das Verhältnis einer Zunahme ΔF einer Aufstandskraft F zu einer Reduzierung Δa eines Abstandes a von Antriebs-Fahrwerk und -Basis in Hubrichtung bzw. einem Einfederweg Δa bezeichnet (c = ΔF/Δa). Wie vorstehend anhand des Beispiels der Fig. 4 erläutert, kann die Steifigkeit sich über den Einfederweg ändern, das Kraftelement entsprechend eine, wenigstens bereichsweise, progressive oder degressive Kennlinie aufweisen. Entsprechend ist nach einer Ausführung die Steifigkeit des bzw. der Antriebs-Kraftelemente für wenigstens einen Bereich des Einfederweges kleiner als die Steifigkeit der Verbindung(en) von Trag-Fahrwerk und -Basis. Falls das Antriebsmodul kein Antriebs-Kraftelement aufweist, kann dies auch als (virtuelles) Antriebs-Kraftelement mit der konstanten Steifigkeit gleich Null betrachtet werden. Unter einer Steifigkeit eines Moduls, insbesondere seiner Verbindung von Basis und Fahrwerk, insbesondere seines Kraftelements, wird insbesondere das Verhältnis einer Zunahme einer Aufstandskraft zu einer Reduzierung eines Abstandes zu einer Aufstandsfläche in Hubrichtung bezeichnet. Es kann entsprechend insbesondere durch Versuche empirisch ermittelt und/oder durch Simulationen berechnet werden, indem für verschiedene Nutzlasten ein Einfedern bzw. eine Reduzierung eines Abstands zwischen Basis und Fahrwerk in Hubrichtung und die zugehörige, von dem Fahrwerk ausgeübte Aufstandskraft ermittelt und zueinander ins Verhältnis gesetzt werden.

In einer Ausführung können die Steifigkeit(en) des bzw. der Tragmodule, insbesondere ihrer Verbindung(en) von Trag-Fahrwerk und -Basis, insbesondere am Beginn des Einfederweges auch kleiner sein als die Steifigkeit(en) des bzw. der Antriebs-Kraftelemente, insbesondere gleich Null sein. Stehen in dem oben erläuterten Beispiel der Fig. 4 bei vom Boden abgehobenem Niederflurtransportsystem die Antriebsräder zum Boden hin über die Tragräder über, so wird bei einem Aufsetzen des Niederflurtransportsystems auf den Boden zunächst die erste Feder gespannt, die zweite weist entsprechend am Beginn des Einfederweges eine Federsteifigkeit c_{T} = 0 auf. Hierdurch kann vorteilhaft eine Reibkraft der Antriebsräder erhöht werden.

Entsprechend erstreckt sich in einer Ausführung der Bereich des Einfederwegs, für den die Steifigkeit des Antriebs-Kraftelements wenigstens eines Antriebsmoduls kleiner ist als die Steifigkeit wenigstens eines Tragmoduls, über wenigstens 30%, insbesondere wenigstens 50%, und/oder höchstens 90%, insbesondere höchstens 75%, eines maximalen Stellweges des Antriebs-Kraftelements in Hubrichtung. Wie am Beispiel miteinander bei abgehobenem Niederflurfördersystem fluchtender Antriebs- und Tragräder erläutert, kann die Steifigkeit des bzw. der Antriebs-Kraftelemente auch über deren gesamtem konstruktiv vorgegebenen bzw. maximalen Stellweg kleiner sein als die Steifigkeit(en) der Verbindung(en) der Tragmodule.

In einer Ausführung weist das Antriebs-Kraftelement eines oder mehrerer Antriebsmodule jeweils wenigstens eine mechanische, pneumatische und/oder hydraulische Feder und/oder wenigstens einen, insbesondere elektrisch steuerbaren, Aktuator auf. Eine pneumatische bzw. Gas(druck)feder weist in einer Ausführung eine gasgefüllte Kammer auf, in der eine Kolbenstange verschiebbar gelagert ist. Durch Einfahren der Kolbenstange in die Kammer wird das Gas komprimiert und beaufschlagt die Stirnfläche der Kolbenstange mit einer größeren Reaktionskraft. Durch entsprechende Kolbenstangendurchmesser kann so eine sehr flache Kennlinie erreicht werden, so dass die pneumatische Feder über einen großen Einfederweg eine im Wesentlichen konstante Aufstandskraft aufprägen kann. Eine entsprechende Aufstandskraft kann alternativ oder zusätzlich durch einen entsprechend angesteuerten Aktuator aufgeprägt werden.

In einer Ausführung ist das Trag-Fahrwerk eines oder mehrerer Tragmodule an der jeweiligen Trag-Basis in Hubrichtung starr bzw. unbeweglich gelagert. Hierdurch kann vorteilhaft ein baulich einfaches und kompaktes Tragmodul zur Verfügung gestellt werden, wobei Bodenunebenheiten dann in einer Ausführung durch Einfedern des bzw. der Antriebs-Fahrwerke ausgeglichen werden können.

In einer Ausführung ist das Trag-Fahrwerk eines oder mehrerer Tragmodule an der jeweiligen Trag-Basis in Hubrichtung, insbesondere zwischen einer ein- und einer ausgefahrenen Stellung, beweglich gelagert und in einer Weiterbildung in Hubrichtung durch ein Trag-Kraftelement nachgiebig abgestützt. In einer Weiterbildung sind wenigstens eine Trag-Basis und die Verbindung mit dem damit verbunden Trag-Fahrwerk und wenigstens eine Antriebs-Basis und die Verbindung mit dem damit verbundenen Antriebs-Fahrwerk, wenigstens im Wesentliche, identisch ausgebildet bzw. baugleich, so dass sich Trag- und Antriebsmodul (nur) durch die Kraftelemente und Fahrwerke unterscheiden. Auf diese Weise kann vorteilhaft durch einfachen Austausch bzw. wahlweise Montage der entsprechenden Kraftelemente und Fahrwerke wahlweise ein Antriebs- oder Tragmodul mit derselben Basis und der - bis auf das Kraftelement - selben Verbindung hergestellt bzw. montiert werden.

In einer Ausführung weist das Trag-Kraftelement eines oder mehrerer Tragmodule wenigstens eine mechanische Feder, insbesondere Schrauben-, Teller- oder Blattfeder, und/oder einen, insbesondere elektrisch steuerbaren, Aktuator auf. Durch entsprechende Federabmessungen und -material kann eine verhältnismäßig steile Kennlinie erreicht werden, so dass die mechanische Feder bereits bei einem kleinen Einfederweg eine relativ große Aufstandskraft aufprägen und das Tragmodul so einen größeren Anteil einer nutzlastinduzierten Druckverteilung übernehmen kann. Eine entsprechende Aufstandskraft kann alternativ oder zusätzlich durch einen entsprechend abgesteuerten Aktuator aufgeprägt werden.

Die Steifigkeit eines Kraft- und/oder eines Trag-Kraftelements in Hubrichtung kann insbesondere durch eine veränderte Anlenkung variiert und so an unterschiedliche Betriebs- bzw. Auslegungsbedingungen angepasst werden. Entsprechend weisen in einer Ausführung eine oder mehrere Antriebsmodule insbesondere deren Antriebs-Basis, -Fahrwerk und/oder Verbindung von Basis und Fahrwerk, insbesondere Lenker und/oder Kraftelement, jeweils zwei oder mehr Anlenkpunkte auf, die zum wahlweisen lösbaren Befestigen des Antriebs-Kraftelements vorgesehen bzw. eingerichtet sind. Zusätzlich oder alternativ weisen in einer Ausführung eine oder mehrere Tragmodule insbesondere deren Trag-Basis, -Fahrwerk und/oder Verbindung von Basis und Fahrwerk, insbesondere Lenker und/oder Kraftelement, jeweils zwei oder mehr Anlenkpunkte auf, die zum wahlweisen lösbaren Befestigen des Antriebs-Kraftelements vorgesehen bzw. eingerichtet sind.

In einer Ausführung sind ein oder mehrere Antriebs-Fahrwerke jeweils zu einer translatorischen Fahrbewegung in einer Fahrrichtung ausgebildet bzw. eingerichtet, insbesondere in einer Vor- und/oder Rückwärtsfahrrichtung senkrecht zu einer Drehachse eines oder mehrerer der Antriebsräder. Zusätzlich oder alternativ sind in einer Ausführung das oder die Antriebs-Fahrwerke jeweils zu einer translatorischen Fahrbewegung in einer Seitwärts- bzw. Links- und/oder Rechtsfahrrichtung parallel zu der Drehachse des bzw. der Antriebsräder ausgebildet bzw. eingerichtet. Zusätzlich oder alternativ sind in einer Ausführung das oder die Antriebs-Fahrwerke jeweils zu einer rotatorischen Fahrbewegung, insbesondere einer Gierbewegung senkrecht zu der Drehachse des bzw. der Antriebsräder und/oder der Vor- und/oder Rückwärtsfahrrichtung ausgebildet bzw. eingerichtet.

Zur Realisierung einer rotatorischen Gierbewegung und einer damit gekoppelten translatorischen Fahrbewegung in Vor-/Rückwärts- und Seitwärtsfahrichtung kann das Antriebs-Fahrwerk insbesondere eine oder mehrere drehbare Lenkachsen aufweisen. In einer Ausführung weisen ein oder mehrere, insbesondere alle, Antriebsräder des Antriebs-Fahrwerks eines oder mehrerer, insbesondere aller, Antriebsmodule jeweils eine oder mehrere Rollen auf, die gegen eine Drehachse des jeweiligen Antriebsrades, insbesondere um wenigstens 30°, vorzugsweise um 45° oder 90°, geneigt drehbar gelagert sind. In einer Ausführung kann das Antriebs-Fahrwerk ein sogenanntes omnidirektionales Fahrwerk, insbesondere mit Mecanum- oder Allseiten- bzw. omnidirektionalen Antriebsrädern, sein. Gleichermaßen können ein oder mehrere Antriebs- und/oder Trag-Fahrwerke auch eine oder mehrere Ketten, Raupen oder dergleichen aufweisen, die die Antriebs- bzw. Tragräder umschlingen.

Eine rotatorische Gierbewegung des Niederflurtransportsystems kann in einer Ausführung auch durch differentiell bzw. mit unterschiedlichen translatorischen Geschwindigkeiten angetriebenen und voneinander quer zur Richtung der translatorischen Geschwindigkeiten beabstandete Antriebsmodulen bzw. -Fahrwerke realisiert werden, insbesondere in der Art einer Kettenfahrzeuglenkung. Insbesondere daher sind in einer Weiterbildung ein oder mehrere der Antriebsfahrwerke nur zu einer translatorischen Fahrbewegung in einer Fahrrichtung ausgebildet.

Die Beweglichkeit eines Antriebs-Fahrwerks relativ zu der Antriebs-Basis in Hubrichtung kann insbesondere durch ein Schubgelenk ausgebildet sein, das Basis und Fahrwerk gelenkig verbinden und dessen Achse die Hubrichtung definieren kann. Gleichermaßen kann sie durch wenigstens zwei miteinander, insbesondere über Lenker, verbundene Drehgelenke mit parallelen Drehachsen ausgebildet sein. Dann kann sich das Antriebs-Fahrwerk relativ zu der Antriebs-Basis in einer Ausführung auf einer Kreisbahn und dabei auch translatorisch in einer Hubrichtung bewegen.

Zusätzlich oder alternativ zu einem translatorischen Freiheitsgrad in Hubrichtung weist nach einem Aspekt das mit der Antriebs-Basis verbundene Antriebs-Fahrwerk eines oder mehrerer Antriebsmodule relativ zu der jeweiligen Antriebs-Basis einen oder zwei Drehfreiheitsgrade auf, deren Drehachsen vorzugsweise senkrecht zu der Hubrichtung und/oder zueinander sind. Hierdurch können in einer Ausführung zusätzlich zu einem Ausgleich in Hubrichtung auch Neigungen des Antriebs-Fahrwerks um eine Nick- und/oder Rollachse senkrecht zur Hubrichtung kompensiert werden. Anspruchsgemäß weist bei wenigstenseinem Antriebsmodul das Antriebs-Fahrwerk relativ zu der Antriebs-Basis zwei Drehfreiheitsgrade auf, deren Drehachsen senkrecht zu der Hubrichtung und zueinander sind.

Insbesondere hierzu ist in einer Ausführung das Antriebs-Fahrwerk eines oder mehrerer Antriebsmodule mit der jeweiligen Antriebs-Basis über ein, zwei oder mehr Drehgelenke und/oder ein, zwei oder mehr Schubgelenke verbunden, wobei in einer Weiterbildung Achsen dieser Gelenke paarweise parallel oder senkrecht sind. In einer Ausführung sind Antriebs-Fahrwerk und -Basis über zwei Dreh- und ein Schubgelenk verbunden, die, ausgehend von der Basis, in der Anordnung Drehgelenk-Drehgelenk-Schubgelenk, Drehgelenk-Schubgelenk-Drehgelenk oder Schubgelenk-Drehgelenk-Drehgelenk in Serie geschaltet sind.

In gleicher Weise kann in einer Ausführung auch das Trag-Fahrwerk eines oder mehrerer Tragmodule jeweils relativ zu dessen Trag-Basis einen translatorischen Freiheitsgrad in Hubrichtung und/oder einen oder zwei Drehfreiheitsgrade aufweisen, deren Drehachsen vorzugsweise senkrecht zu der Hubrichtung und/oder zueinander sind. Insbesondere hierzu kann in einer Ausführung auch das Trag-Fahrwerk eines oder mehrerer Tragmodule mit der jeweiligen Trag-Basis über ein, zwei oder mehr Drehgelenke und/oder ein, zwei oder mehr Schubgelenke verbunden sein, wobei in einer Weiterbildung Achsen dieser Gelenke paarweise parallel oder senkrecht sind. In einer Ausführung sind Trag-Fahrwerk und -Basis über zwei Dreh- und ein Schubgelenk verbunden, die, ausgehend von der Basis, in der Anordnung Drehgelenk-Drehgelenk-Schubgelenk, Drehgelenk-Schubgelenk-Drehgelenk oder Schubgelenk-Drehgelenk-Drehgelenk in Serie geschaltet sind. Zusätzlich oder alternativ kann zwischen Trag-Basis und Trag-Fahrwerk, insbesondere einem oder mehreren Tragräder, auch ein Drehgelenk angeordnet sein, das einen rotatorischen Freiheitsgrad um eine zur Hubrichtung parallele Drehachse bilden kann.

In einer Ausführung sind die Antriebs-Basis und das Antriebs-Fahrwerk eines oder mehrerer Antriebsmodule und/oder die Trag-Basis und das Trag-Fahrwerk eines oder mehrerer Tragmodule in bzw. bezüglich der Hubrichtung jeweils drehfest, insbesondere, wenigstens im Wesentlichen, drehspielfrei, insbesondere drehstarr bzw. unverdrehbar, miteinander verbunden. Mit anderen Worten weist in einer Ausführung bei einem oder mehrerer Antriebsmodulen das Antriebs-Fahrwerk relativ zu der Antriebs-Basis in bzw. bezüglich der Hubrichtung keinen bzw. einen gesperrten Drehfreiheitsgrad auf bzw. bei einem oder mehrerer Tragmodulen das Trag-Fahrwerk relativ zu der Trag-Basis in bzw. bezüglich der Hubrichtung keinen bzw. einen gesperrten Drehfreiheitsgrad auf. Anspruchsgemäß sind bei wenigstens einem Antriebsmodul die Antriebs-Basis und das Antriebs-Fahrwerk bezüglich der Hubrichtung drehfest miteinander verbunden.

Zusätzlich oder alternativ sind in einer Ausführung die Antriebs-Basis und das Antriebs-Fahrwerk eines oder mehrerer Antriebsmodule und/oder die Trag-Basis und das Trag-Fahrwerk eines oder mehrerer Tragmodule in bzw. bezüglich einer oder zwei zueinander senkrechten Querrichtungen, die senkrecht zu der Hubrichtung sind, jeweils axialfest, insbesondere, wenigstens im Wesentlichen, axialspielfrei, insbesondere axial starr bzw. unverschiebbar, miteinander verbunden. Mit anderen Worten weist in einer Ausführung bei einem oder mehrerer Antriebsmodulen das Antriebs-Fahrwerk relativ zu der Antriebs-Basis in bzw. bezüglich der Querrichtung(en) keinen bzw. einen gesperrten translatorischen bzw. Axialfreiheitsgrad auf bzw. bei einem oder mehrerer Tragmodulen das Trag-Fahrwerk relativ zu der Trag-Basis in bzw. bezüglich der Querrichtung(en) keinen bzw. einen gesperrten translatorischen bzw. Axialfreiheitsgrad auf.

Miteinander verbundene Basen können in einer Ausführung aneinander angrenzen. Entsprechend kontaktieren in einer Ausführung eine Außenkontur, insbesondere Stirnseite, einer oder mehrerer, insbesondere plattenartiger, Antriebs- oder Trag-Basen und eine dieser jeweils gegenüberliegenden Außenkontur, insbesondere Stirnseite, einer oder mehrerer damit verbundenen, insbesondere plattenartigen, Trag- oder Antriebs-Basen einander. Hierdurch kann vorteilhaft eine geschlossene Ladefläche zur Verfügung gestellt werden.

Zusätzlich oder alternativ können in einer Ausführung miteinander verbundene Basen, insbesondere deren einander gegenüberliegende Außenkonturen, insbesondere Stirnseiten, auch voneinander beabstandet sein, insbesondere durch, vorzugsweise balkenartige, Stege. Hierdurch kann vorteilhaft eine große Ladeflächenaußenabmessung zur Verfügung gestellt werden.

Insbesondere, um mit mehreren miteinander verbundenen Basen eine vorteilhafte Ladefläche zur Verfügung zu stellen, weisen Basen in einer Ausführung eine eckige, insbesondere gleichseitige und/oder drei-, recht-, sechs- oder achteckige, Außenkontur auf. Hierdurch können die Basen kuchen-, kachel- bzw. wabenartig zusammengefügt werden bzw. sein.

Ein Aspekt der vorliegenden Erfindung betrifft ein hier beschriebenes Antriebsmodul für ein hier beschriebenes Niederflurtransportsystem, das zur Verbindung mit wenigstens einem hier beschriebenen Trag- und in einer Weiterbildung wenigstens einem weiteren hier beschriebenen Antriebsmodul vorgesehen bzw. eingerichtet ist, insbesondere eine entsprechende Kupplung aufweist.

Entsprechend betrifft ein weiterer Aspekt der vorliegenden Erfindung ein hier beschriebenes Tragmodul für ein hier beschriebenes Niederflurtransportsystem, das zur Verbindung mit wenigstens einem hier beschriebenen Antriebs- und in einer Weiterbildung wenigstens einem weiteren hier beschriebenen Tragmodul vorgesehen bzw. eingerichtet ist, insbesondere eine entsprechende Kupplung aufweist.

Ein weiterer Aspekt der vorliegenden Erfindung betrifft ein Verfahren zur Montage eines hier beschriebenen Niederflurtransportsystems, wobei in einer Ausführung wahlweise unterschiedliche hier beschriebene Antriebsmodule und/oder hier beschriebene Antriebsmodule in unterschiedlicher Anzahl und/oder Anordnung sowie unterschiedliche hier beschriebene Tragmodule und/oder hier beschriebene Tragmodule in unterschiedlicher Anzahl und/oder Anordnung miteinander, insbesondere lösbar, verbunden werden.

Weitere Vorteile und Merkmale ergeben sich aus den Unteransprüchen und den Ausführungsbeispielen. Hierzu zeigt, teilweise schematisiert:
- Fig. 1A:: ein Antriebsmodul eines Niederflurtransportsystems nach einer Ausführung der vorliegenden Erfindung in einer Frontalansicht;
- Fig. 1B:: einen Schnitt längs der Linie B-B in Fig. 1A;
- Fig. 2:: ein Tragmodul des Niederflurtransportsystems in Fig. 1A entsprechender Ansicht;
- Fig. 3A - 3E:: jeweils eine Draufsicht auf ein Niederflurtransportsystem nach einer Ausführung der vorliegenden Erfindung;
- Fig. 4:: eine Skizze zur Erläuterung eines Niederflurtransportsystems nach einer Ausführung der vorliegenden Erfindung; und
- Fig. 5:: ein Tragmodul eines Niederflurtransportsystems nach einer Ausführung der vorliegenden Erfindung in Fig. 2 entsprechender Ansicht.

Fig. 3A zeigt ein modulares Niederflurtransportsystem nach einer Ausführung der vorliegenden Erfindung in einer Draufsicht von oben auf eine Tragebene. Das Niederflurtransportsystem weist exemplarisch zwei Antriebsmodule mit plattenartigen Antriebs-Basen 100 und zwei Tragmodule mit Trag-Basen 200 auf, die jeweils gleichseitige und rechteckige Außenkonturen aufweisen und miteinander an ihren einander gegenüberliegenden Stirnseiten und/oder mit einer nicht dargestellten gemeinsamen Stützstruktur verschraubt sind.

Fig. 3B zeigt in Fig. 3A entsprechender Ansicht ein modulares Niederflurtransportsystem nach einer weiteren Ausführung der vorliegenden Erfindung, wobei die Antriebs-Basen 100 und Trag-Basen 200 durch balkenartige Stege 400 voneinander beabstandet verbunden sind.

Fig. 3C zeigt in Fig. 3A, 3B entsprechender Ansicht ein modulares Niederflurtransportsystem nach einer weiteren Ausführung der vorliegenden Erfindung, wobei die Antriebs-Basen 100 und Trag-Basen 200 jeweils gleichseitige und dreieckige Außenkonturen aufweisen und miteinander kuchenartig zusammengefügt bzw. verbunden, beispielsweise an ihren einander gegenüberliegenden Stirnseiten und/oder einer nicht dargestellten gemeinsamen Stützstruktur verschraubt sind.

Fig. 3D zeigt in Fig. 3A - 3C entsprechender Ansicht ein modulares Niederflurtransportsystem nach einer weiteren Ausführung der vorliegenden Erfindung, wobei die Antriebs-Basen 100 und Trag-Basen 200 jeweils gleichseitige und sechseckige Außenkonturen aufweisen und miteinander wabenartig zusammengefügt bzw. verbunden, beispielsweise an ihren einander gegenüberliegenden Stirnseiten und/oder einer nicht dargestellten gemeinsamen Stützstruktur verschraubt sind.

Fig. 3E zeigt in Fig. 3A - 3D entsprechender Ansicht ein modulares Niederflurtransportsystem nach einer weiteren Ausführung der vorliegenden Erfindung, wobei eine zentrale plattenartige Antriebs-Basis 100 durch Stege 400 mit einer konzentrischen rahmenartigen Trag-Basis 200 von dieser beabstandet verbunden ist.

Aus der Zusammenschau der Fig. 3A - 3E wird deutlich, dass durch wahlweises Verbinden von Antriebs- und Tragmodulen in unterschiedlicher Anzahl und/oder Anordnung ein modulares Niederflurtransportsystem zur Verfügung gestellt wird, dass durch Austausch, Entfernen und/oder Hinzufügen einzelner Module sehr einfach und variabel veränder-, insbesondere erweiterbar ist.

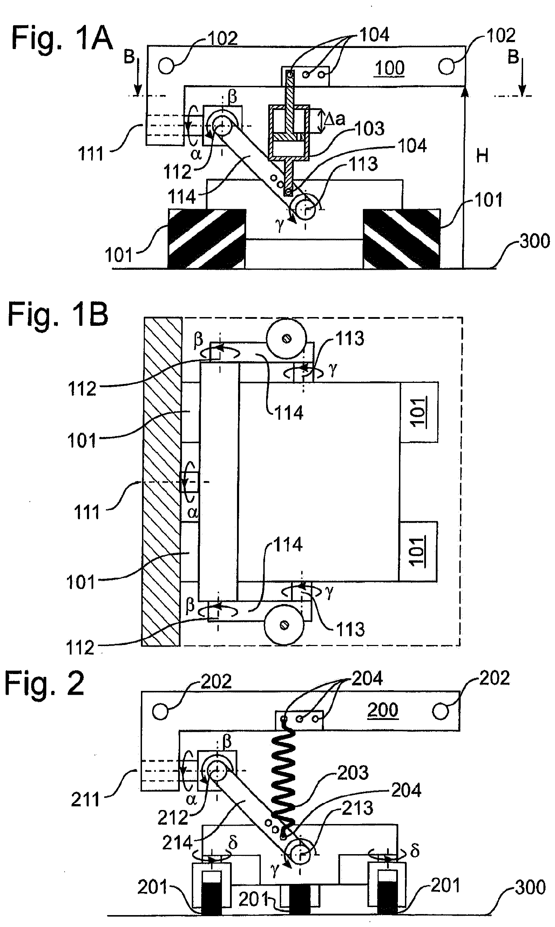

Mit Bezug auf Fig. 1A, 1B wird nun eines der in Fig. 3A - 3E in einer Draufsicht gezeigten baugleichen Antriebsmodule näher erläutert, wobei der Schnitt der Fig. 1B dieser Draufsicht mit entfernter Antriebs-Basis 100 entspricht, mit Bezug auf Fig. 2 eines der in Fig. 3A - 3E gezeigten baugleichen Tragmodule.

Ein Antriebsmodul weist jeweils die mit Bezug auf Fig. 3A - 3E bereits genannte Antriebs-Basis 100 und ein damit verbundenes omnidirektionales Antriebs-Fahrwerk auf, das im Ausführungsbeispiel vier Mecanum-Antriebsräder 101 aufweist, die jeweils mit einem Antrieb (nicht dargestellt) gekoppelt und so zu einer translatorischen Fahrbewegung in einer Vor- und/oder Rückwärtsfahrrichtung (vertikal in Fig. 1B) senkrecht zu einer Drehachse der Antriebsräder, zu einer translatorischen Fahrbewegung in einer Seitwärts- bzw. Links- und/oder Rechtsfahrrichtung (horizontal in Fig. 1B) parallel zu der Drehachse der Antriebsräder und zu einer rotatorischen Gierbewegung senkrecht zu der Drehachse der Antriebsräder und der Vor- und/oder Rückwärtsfahrrichtung ausgebildet bzw. eingerichtet sind.

Ein Tragmodul weist jeweils die mit Bezug auf Fig. Fig. 3A - 3E bereits genannte Trag-Basis 200 und ein damit verbundenes Trag-Fahrwerk mit drei antriebslosen Tragrädern 201 auf.

In der Frontalansicht der Fig. 1A, 2 sind exemplarisch Bohrungen 102 bzw. 202 angedeutet, über die die Basen 100, 200 miteinander verschraubt werden bzw. sind, und die somit Kupplungen bilden, die dazu eingerichtet sind, die Basen 100, 200 axial- und drehfest bzw. starr miteinander zu verbinden.

Das Antriebs-Fahrwerk 101 ist an der Antriebs-Basis 100 in einer Hubrichtung H zwischen einer durch Anschläge (nicht dargestellt) begrenzten bzw. definierten ein- und ausgefahrenen Stellung beweglich gelagert. Hierzu sind im Ausführungsbeispiel das Antriebs-Fahrwerk 101 und die Antriebs-Basis 100 über ein erstes Drehgelenk 111, welches einen Nickwinkel α des Fahrwerks gegen die Basis kompensiert, zwei miteinander fluchtende zweite Drehgelenke 112, deren Drehwinkel mit β angedeutet ist, und zwei miteinander fluchtende dritte Drehgelenke 113, welche einen Rollwinkel y des Fahrwerks gegen die Basis kompensieren, miteinander gelenkig verbunden, wobei die Achsen der zweiten und dritten Drehgelenke 112, 113 parallel und senkrecht zu der Achse des ersten Drehgelenks 111 sind.

Die zweiten und mit ihnen über Lenker 114 verbundenen dritten Drehgelenke 112, 113 definieren die translatorische Beweglichkeit bzw. ein mögliches Einfedern des Antriebs-Fahrwerks 101 in Hubrichtung H gegen die Antriebs-Basis 100 in an sich von Längslenkern bekannter Weise. Nickwinkel α und Rollwinkel y bilden zwei Drehfreiheitsgrade, deren Drehachsen zur Hubrichtung und zueinander senkrecht sind.

In der Hubrichtung ist das Antriebs-Fahrwerk 101 an der Antriebs-Basis 100 durch ein Antriebs-Kraftelement in Form einer Gas(druck)feder 103 nachgiebig abgestützt, welche zur Verdeutlichung in Fig. 1A geschnitten dargestellt ist. Die basenfeste Hubrichtung H schließt mit der Tragebene (oben in Fig. 1A) der miteinander verbundenen Basen 100, 200 zur Aufnahme von Nutzlasten einen Winkel von etwa 90° und mit der Schwerkraftrichtung (von oben nach unten in Fig. 1A) einen Winkel von etwa 0° ein, wenn das nutzlastfreie Niederflurtransportsystem auf einer ebenen horizontalen Aufstandsfläche 300 steht, wie in Fig. 1A gezeigt.

Antriebs-Basis 100 und Lenker 114 weisen jeweils mehrere Anlenkpunkte 104 auf, die zum wahlweisen lösbaren Befestigen der Gasfeder 103 vorgesehen bzw. eingerichtet sind.

Trag-Basis 200 und Trag-Fahrwerk 201 sind in baugleicher Weise miteinander verbunden, so dass sich Trag- und Antriebsmodule nur durch die Kraftelemente und Fahrwerke unterscheiden und daher in Hinblick auf Fig. 2 auf die vorstehende Beschreibung Bezug genommen wird, wobei die Bezugszeichen einander entsprechender Elemente in Fig. 2 bzw. bei dem Tragmodul um 100 erhöht sind.

Im Unterschied zur Gasfeder 103 der Antriebsmodule sind Trag-Fahrwerk und Trag-Basis durch ein Trag-Kraftelement in Form einer mechanischen Feder 203 in Hubrichtung abgestützt, die eine deutlich steilere Kennlinie aufweist bzw. bei gleichem Einfederweg in Hubrichtung H eine deutlich größere Aufstandskraft aufprägt.

Zusätzlich weisen die antriebslosen Tragräder 201 einen passiven rotatorischen Freiheitsgrad δ um eine zur Hubrichtung H parallele Drehachse auf.

Die Gas- und mechanischen Federn 103, 203 sind derart ausgebildet, dass für einen Einfederweg Δa des Antriebs-Fahrwerks 101 gegen die Antriebs-Basis 100 in Hubrichtung H eine Aufstandskraft dieses Antriebs-Fahrwerks 101 auf die gemeinsame ebene Aufstandsfläche 300 kleiner als eine Aufstandskraft des Trag-Fahrwerks 201 ist. Dies ergibt sich im Ausführungsbeispiel, wie einleitend mit Bezug auf Fig. 4 schematisch erläutert, aus der wesentlich steileren Kennlinie der mechanischen Feder 203: diese prägt bei gleichem Einfederweg in Hubrichtung aufgrund ihrer größeren Steifigkeit eine größere Aufstandskraft auf die gemeinsame ebene Aufstandsfläche 300 auf als die Gasfeder 103, die über einen weiten Bereich des maximal möglichen Einfederweges eine nahezu konstante Aufstandskraft vermittelt und so die Mecanum-Antriebsräder 101 und deren Antrieb(e) vor Überlastung schützt. Auf der anderen Seite vermittelt diese Aufstandskraft jedoch einen vorteilhaften Reibschluss zur omidirektionalen Bewegung des Antriebs-Fahrwerks auf der Aufstandsfläche.

Obwohl in der vorhergehenden Beschreibung exemplarische Ausführungen erläutert wurden, sei darauf hingewiesen, dass eine Vielzahl von Abwandlungen möglich ist.

So können insbesondere in einer nicht dargestellten Ausführung die Tragräder 201 auch in Hubrichtung starr bzw. unbeweglich an der Trag-Basis 200 gelagert sein.

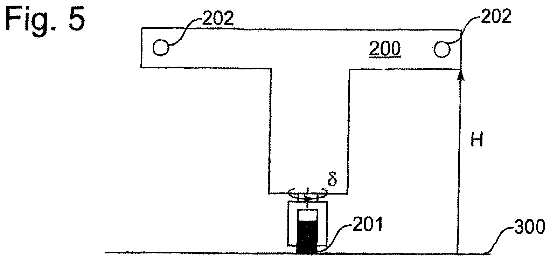

Hierzu zeigt Fig. 5 in Fig. 2 entsprechender Darstellung ein solches Tragmodul, welches insbesondere anstelle eines vorstehend mit Bezug auf Fig. 2 erläuterten Tragmoduls in einem Niederflurtransportsystem verwendet werden kann, wie es insbesondere mit Bezug auf Fig. 3A - 3E erläutert wurde. Einander entsprechende Merkmale sind durch identische Bezugszeichen identifiziert, so dass auf die Beschreibung der Fig. 2 Bezug genommen wird.

Im Ausführungsbeispiel der Fig. 5 ist das einzige antriebslose Tragrad 201, wie durch den Winkel δ angedeutet, durch ein Drehgelenk um eine zur Hubrichtung H parallele Drehachse beweglich an der Trag-Basis 200 gelagert, jedoch in Hubrichtung selber starr mit der Trag-Basis 200 verbunden.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 100: Antriebs-Basis
- 101: (Mecanum-)Antriebsrad (Antriebs-Fahrwerk)
- 102: Bohrung (Kupplung)
- 103: Gasfeder (Antriebs-Kraftelement)
- 104: Anlenkpunkt
- 111: erstes Drehgelenk (α)
- 112: zweites Drehgelenk (β)
- 113: drittes Drehgelenk (γ)
- 114: Lenker
- 200: Trag-Basis
- 201: Tragrad (Trag-Fahrwerk)
- 202: Bohrung (Kupplung)
- 203: Schraubenfeder (Trag-Kraftelement)
- 204: Anlenkpunkt
- 211: erstes Drehgelenk (α)
- 212: zweites Drehgelenk (β)
- 213: drittes Drehgelenk (γ)
- 214: Lenker
- 300: Aufstandsfläche
- 400: Steg

- H: Hubrichtung
- Δa: Einfederweg
- c_{A}, c_{T}: Federsteifigkeit

## Patentansprüche

1. Modulares Niederflurtransportsystem
mit wenigstens einem Antriebsmodul, das
eine Antriebs-Basis (100) und
ein damit verbundenes Antriebs-Fahrwerk (101) mit wenigstens einem Antriebsrad aufweist, welches mit einem Antrieb gekoppelt ist,
und mit wenigstens einem Tragmodul, das
eine Trag-Basis (200) und
ein damit verbundenes Trag-Fahrwerk (201) mit wenigstens einem antriebslosen Tragrad aufweist,
wobei die Antriebs-Basis und die Trag-Basis bezüglich einer Hubrichtung (H) fest miteinander verbunden sind und das Antriebs-Fahrwerk an der Antriebs-Basis in der Hubrichtung (H) beweglich gelagert (112, 113) ist, wobei das Antriebs-Fahrwerk (101) relativ zu der Antriebs-Basis (100) zwei Drehfreiheitsgrade aufweist, deren Drehachsen zur Hubrichtung (H) und zueinander senkrecht sind, und wobei
die Antriebs-Basis und das Antriebs-Fahrwerk bezüglich der Hubrichtung drehfest miteinander verbunden sind.

2. Modulares Niederflurtransportsystem nach dem vorhergehenden Anspruch,
**dadurch gekennzeichnet, dass** das Antriebs-Fahrwerk (101) in der Hubrichtung (H) durch ein Antriebs-Kraftelement (103) nachgiebig abgestützt ist.

3. Modulares Niederflurtransportsystem nach dem vorhergehenden Anspruch,
**dadurch gekennzeichnet, dass** das Antriebs-Kraftelement (103) derart ausgebildet ist, dass für wenigstens einen Bereich eines Einfederweges (Δa) des Antriebs-Fahrwerks gegen die Antriebs-Basis (100) in Hubrichtung (H) eine Aufstandskraft des Antriebs-Fahrwerks (101) auf eine gemeinsame ebene Aufstandsfläche (300) senkrecht zu der Hubrichtung kleiner als eine Aufstandskraft des Trag-Fahrwerks ist.

4. Modulares Niederflurtransportsystem nach dem vorhergehenden Anspruch,
**dadurch gekennzeichnet, dass** eine Steifigkeit (c_{A}) des Antriebs-Kraftelements (103) für wenigstens einen Bereich des Einfederweges (Δa) kleiner als eine Steifigkeit (c_{T}) des Tragmoduls in Hubrichtung ist.

5. Modulares Niederflurtransportsystem nach einem der vorhergehenden Ansprüche 2 bis 4, **dadurch gekennzeichnet, dass** das Antriebs-Kraftelement (103) eine mechanische, pneumatische und/oder hydraulische Feder und/oder einen, insbesondere elektrisch steuerbaren, Aktuator aufweist.

6. Modulares Niederflurtransportsystem nach einem der vorhergehenden Ansprüche, **dadurch gekennzeichnet, dass** das Trag-Fahrwerk (201) an der Trag-Basis in Hubrichtung beweglich gelagert (212, 213) und insbesondere durch ein Trag-Kraftelement (203) nachgiebig abgestützt ist.

7. Modulares Niederflurtransportsystem nach dem vorhergehenden Anspruch,
**dadurch gekennzeichnet, dass** das Trag-Kraftelement (203) eine mechanische Feder und/oder einen, insbesondere elektrisch steuerbaren, Aktuator aufweist.

8. Modulares Niederflurtransportsystem nach einem der vorhergehenden Ansprüche 2 bis 7, **dadurch gekennzeichnet, dass** wenigstens eines der Module wenigstens zwei Anlenkpunkte (104, 204) zum wahlweisen lösbaren Befestigen des Kraftelements aufweist.

9. Modulares Niederflurtransportsystem nach einem der vorhergehenden Ansprüche, **dadurch gekennzeichnet, dass** das Antriebs-Fahrwerk (101) zu einer translatorischen Fahrbewegung in wenigstens einer Fahrrichtung und/oder zu einer rotatorischen Fahrbewegung ausgebildet ist.

10. Modulares Niederflurtransportsystem nach dem vorhergehenden Anspruch,
**dadurch gekennzeichnet, dass** wenigstens ein Antriebsrad des Antriebs-Fahrwerks (101) Rollen aufweist, die gegen eine Drehachse des Antriebsrades geneigt drehbar gelagert sind.

11. Modulares Niederflurtransportsystem nach einem der vorhergehenden Ansprüche, **dadurch gekennzeichnet, dass** das Antriebs-Fahrwerk (101) mit der Antriebs-Basis (100) und/oder das Trag-Fahrwerk (201) mit der Trag-Basis (200) über wenigstens ein Dreh- und/oder wenigstens ein Schubgelenk (111-113, 211-213) verbunden ist.

12. Modulares Niederflurtransportsystem nach einem der vorhergehenden Ansprüche, **dadurch gekennzeichnet, dass** eine Außenkontur der, insbesondere plattenartigen, Antriebs-Basis (100) und eine dieser gegenüberliegende Außenkontur der damit verbundenen, insbesondere plattenartigen, Trag-Basis (200) einander kontaktieren oder voneinander beabstandet sind.

13. Modulares Niederflurtransportsystem nach einem der vorhergehenden Ansprüche, **dadurch gekennzeichnet, dass** die Antriebs- (100) und/oder die Trag-Basis (200) eine eckige, insbesondere gleichseitige und/oder drei-, recht-, sechs- oder achteckige, Außenkontur aufweist.

14. Antriebsmodul für ein Niederflurtransportsystem nach einem der vorhergehenden Ansprüche, **dadurch gekennzeichnet, dass** sein Antriebs-Fahrwerk relativ zu seiner Antriebs- Basis (100) zwei Drehfreiheitsgrade aufweist, deren Drehachsen zur Hubrichtung und zueinander senkrecht sind, wobei die Antriebs-Basis und das Antriebs-Fahrwerk bezüglich der Hubrichtung drehfest miteinander verbunden sind.

15. Verfahren zur Montage eines Niederflurtransportsystems nach einem der vorhergehenden Ansprüche 1 bis 13, wobei wahlweise wenigstens eines von mehreren Antriebsmodulen und wenigstens eines von mehreren Tragmodulen miteinander, insbesondere lösbar, verbunden werden.

## Claims

1. A modular low-floor transport system comprising at least one drive module which comprises
a drive base (100) and
a drive chassis (101) which is connected thereto, and which has at least one drive wheel which is coupled to a drive
and which comprises at least one carrier module which comprises
a carrier base (200) and
a carrier chassis (201) which is connected thereto, and which has at least one driveless carrier wheel,
wherein the drive base and the carrier base are fixedly connected to one another with respect to a lifting direction (H) and the drive chassis is mounted (112, 113) on the drive base so as to be movable in the lifting direction (H),
wherein the drive chassis (101) has two rotational degrees of freedom with respect to the drive base (100), wherein the axes of rotation of the two rotational degrees of freedom are perpendicular to the lifting direction (H) and to one another, and wherein the drive base and the drive chassis are connected to one another in a non-rotatable manner with respect to the lifting direction.

2. The modular low-floor transport system according to the preceding claim, **characterised in that** the drive chassis (101) is supported in the lifting direction (H) by a drive force element (103) in a resilient manner.

3. The modular low-floor transport system according to the preceding claim, **characterised in that** the drive force element (103) is constructed in such a way that a contact force of the drive chassis (101) on a common flat contact surface (300) perpendicular to the lifting direction is smaller than a contact force of the carrier chassis for at least one portion of a jounce travel (Δa) of the drive chassis against the drive base (100) in the lifting direction (H).

4. The modular low-floor transport system according to the preceding claim, **characterised in that**, for at least a portion of the jounce travel (Δa), a stiffness (c_{A}) of the drive force element (103) is smaller than a stiffness (c_{T}) of the carrier module in the lifting direction.

5. The modular low-floor transport system according to any one of the preceding claims 2 to 4, **characterised in that** the drive force element (103) comprises a mechanical, a pneumatic and/or a hydraulic spring and/or an actuator, in particular an electrically controllable actuator.

6. The modular low-floor transport system according to any one of the preceding claims, **characterised in that** the carrier chassis (201) is mounted (212, 213) on the carrier base (200) in such a way that it is movable in the lifting direction and in particular that it is supported by a carrier force element (203) in a resilient manner.

7. The modular low-floor transport system according to the preceding claim, **characterised in that** the carrier force element (203) comprises a mechanical spring and/or an actuator, in particular an electrically controllable actuator.

8. The modular low-floor transport system according to any one of the preceding claims 2 to 7, **characterised in that** at least one of the modules comprises at least two articulation points (104, 204) for selectively attaching the force element in a releasable manner.

9. The modular low-floor transport system according to any one of the preceding claims, **characterised in that** the drive chassis (101) is constructed for a translatory travel movement in at least one direction of travel and/or for a rotary travel movement.

10. The modular low-floor transport system according to the preceding claim, **characterised in that** at least one drive wheel of the drive chassis (101) comprises rollers which are rotatably mounted such that axes of rotation of the rollers are at an angle with respect to an axis of rotation of the drive wheel.

11. The modular low-floor transport system according to any one of the preceding claims, **characterised in that** the drive chassis (101) is connected to the drive base (100) and/or that the carrier chassis (201) is connected to the carrier base (200) via at least one swivel joint and/or at least one sliding joint (111-113, 211-213).

12. The modular low-floor transport system according to any one of the preceding claims, **characterised in that** an outer contour of the drive base (100), in particular an outer contour of the drive base (100) which is plate-like in form, and an outer contour of the carrier base (200) which is connected thereto, in particular an outer contour of the carrier base (200) which is connected thereto and which is plate-like in form, which outer contour of the carrier base (200) is opposite the outer contour of the drive base (100), are in contact with each other or are spaced apart from each other.

13. The modular low-floor transport system according to any one of the preceding claims, **characterised in that** the drive base (100) and/or the carrier base (200) has an angular shaped outer contour, in particular an equilateral and/or a triangular, a rectangular, a hexagonal or an octagonal outer contour.

14. A drive module for a low-floor transport system according to any one of the preceding claims, **characterised in that** its drive chassis has two rotational degrees of freedom with respect to its drive base (100), the axes of rotation of which are perpendicular to the lifting direction and perpendicular to one another, wherein the drive base and the drive chassis are connected to one another in a non-rotatable manner with respect to the lifting direction.

15. A method of assembling a low-floor transport system according to any one of the preceding claims 1 to 13, wherein at least one of a plurality of drive modules and at least one of a plurality of carrier modules are selectively connected to one another, in particular in a detachable manner.

## Revendications

1. Système de transport surbaissé modulaire avec au moins un module d'entraînement, qui présente une base d'entraînement (100) et un châssis d'entraînement (101) qui y est relié avec au moins une roue d'entraînement, laquelle est couplée à un entraînement, et avec au moins un module porteur, qui présente une base porteuse (200) et un châssis porteur (201) qui y est relié avec au moins une roue porteuse sans entraînement,
dans lequel la base d'entraînement et la base porteuse sont reliées solidement l'une à l'autre par rapport à une direction de levage (H) et le châssis d'entraînement au niveau de la base d'entraînement est logé mobile (112, 113) dans la direction de levage (H),
dans lequel le châssis d'entraînement (101) présente par rapport à la base d'entraînement (100) deux degrés de liberté de rotation, dont les axes de rotation sont perpendiculaires par rapport à la direction de levage (H) et l'un par rapport à l'autre, et dans lequel
la base d'entraînement et le châssis d'entraînement sont reliés l'un à l'autre de manière non rotative par rapport à la direction de levage.

2. Système de transport surbaissé modulaire selon la revendication précédente, **caractérisé en ce que** le châssis d'entraînement (101) est soutenu de manière élastique dans la direction de levage (H) par un élément de force d'entraînement (103).

3. Système de transport surbaissé modulaire selon la revendication précédente, **caractérisé en ce que** l'élément de force d'entraînement (103) est réalisé de sorte que pour au moins une zone d'une course de compression (Δa) du châssis d'entraînement contre la base d'entraînement (100) dans la direction de levage (H), une force de contact du châssis d'entraînement (101) sur une surface de contact (300) plane commune perpendiculaire à la direction de levage est plus petite qu'une force de contact du châssis porteur.

4. Système de transport surbaissé modulaire selon la revendication précédente, **caractérisé en ce qu'**une rigidité (c_{A}) de l'élément de force d'entraînement (103) pour au moins une zone de la course de compression (Δa) est plus petite qu'une rigidité (c_{T}) du module porteur dans la direction de levage.

5. Système de transport surbaissé modulaire selon l'une quelconque des revendications précédentes 2 à 4, **caractérisé en ce que** l'élément de force d'entraînement (103) présente un ressort mécanique, pneumatique et / ou hydraulique et / ou un actionneur, en particulier à commande électrique.

6. Système de transport surbaissé modulaire selon l'une quelconque des revendications précédentes, **caractérisé en ce que** le châssis porteur (201) au niveau de la base porteuse est logé mobile (212, 213) dans la direction de levage et est soutenu de manière élastique en particulier par un élément de force porteur (203).

7. Système de transport surbaissé modulaire selon la revendication précédente, **caractérisé en ce que** l'élément de force porteur (203) présente un ressort mécanique et / ou un actionneur, en particulier à commande électrique.

8. Système de transport surbaissé modulaire selon l'une quelconque des revendications précédentes 2 à 7, **caractérisé en ce qu'**au moins un des modules présente au moins deux points d'articulation (104, 204) pour la fixation amovible sélective de l'élément de force.

9. Système de transport surbaissé modulaire selon l'une quelconque des revendications précédentes, **caractérisé en ce que** le châssis d'entraînement (101) est réalisé pour un mouvement de déplacement en translation dans au moins une direction de déplacement et / ou pour un mouvement de déplacement en rotation.

10. Système de transport surbaissé modulaire selon la revendication précédente, **caractérisé en ce qu'**au moins une roue d'entraînement du châssis d'entraînement (101) présente des rouleaux, qui sont logés en rotation inclinés par rapport à un axe de rotation de la roue d'entraînement.

11. Système de transport surbaissé modulaire selon l'une quelconque des revendications précédentes, **caractérisé en ce que** le châssis d'entraînement (101) est relié à la base d'entraînement (100) et / ou le châssis porteur (201) est relié à la base porteuse (200) par le biais d'au moins un pivot et / ou d'au moins une glissière (111-113, 211-213).

12. Système de transport surbaissé modulaire selon l'une quelconque des revendications précédentes, **caractérisé en ce qu'**un contour extérieur de la base d'entraînement (100), en particulier de type plaque, et un contour extérieur opposé à celui-ci de la base porteuse (200), en particulier de type plaque, qui y est reliée se touchent l'un l'autre ou sont espacés l'un de l'autre.

13. Système de transport surbaissé modulaire selon l'une quelconque des revendications précédentes, **caractérisé en ce que** la base d'entraînement (100) et / ou la base porteuse (200) présente un contour extérieur angulaire, en particulier équilatéral et/ou triangulaire, rectangulaire, hexagonal ou octogonal.

14. Module d'entraînement pour un système de transport surbaissé selon l'une quelconque des revendications précédentes, **caractérisé en ce que** son châssis d'entraînement présente par rapport à sa base d'entraînement (100) deux degrés de liberté de rotation, dont les axes de rotation sont perpendiculaires par rapport à la direction de levage et l'un par rapport à l'autre, dans lequel la base d'entraînement et le châssis d'entraînement sont reliés l'un à l'autre de manière non rotative par rapport à la direction de levage.

15. Procédé de montage d'un système de transport surbaissé selon l'une quelconque des revendications précédentes 1 à 13, dans lequel au choix au moins un parmi plusieurs modules d'entraînement et au moins un parmi plusieurs modules porteurs sont reliés l'un à l'autre, en particulier de manière amovible.
